Europäisches Patentamt

European Patent Office

Office européen des brevets

(11) Numéro de publication: **0 329 049 B1**

(12) **FASCICULE DE BREVET EUROPEEN**

(45) Date de publication de fascicule du brevet: **30.06.93** (51) Int. Cl.⁵: **H04L 7/02**

(21) Numéro de dépôt: **89102420.0**

(22) Date de dépôt: **13.02.89**

(54) **Procédé d'asservissement de l'instant de régénération dans une transmission numérique utilisant une modulation de porteuse selon deux axes en quadrature et dispositif de mise en oeuvre de ce procédé.**

(30) Priorité: **18.02.88 FR 8801923**

(43) Date de publication de la demande:
**23.08.89 Bulletin 89/34**

(45) Mention de la délivrance du brevet:
**30.06.93 Bulletin 93/26**

(84) Etats contractants désignés:
**DE ES FR GB IT NL SE**

(56) Documents cités:
**EP-A- 0 080 020**
**EP-A- 0 184 805**
**EP-A- 0 230 900**

(73) Titulaire: **ALCATEL TELSPACE**
**5, rue Noel Pons**
**F-92734 Nanterre Cédex(FR)**

(72) Inventeur: **De Luca, Olivier**
**9, rue Rouget de Lisle**
**F-92150 Suresnes(FR)**

(74) Mandataire: **Weinmiller, Jürgen et al**
**Lennéstrasse 9 Postfach 24**
**W-8133 Feldafing (DE)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

# Description

L'invention concerne un procédé d'asservissement de l'instant de régénération dans une transmission numérique utilisant une modulation de porteuse selon deux axes en quadrature et un dispositif de mise en oeuvre de ce procédé.

L'invention concerne la régénération des signaux reçus dans une transmission numérique, plus particulièrement dans le cas des faisceaux hertziens numériques, notamment lorsqu'on utilise un égaliseur temporel réalisé en fréquence intermédiaire.

Si l'on considère une transmission numérique basée sur la modulation et la démodulation en amplitude et phase d'une porteuse suivant deux axes en quadrature, se pose le problème technique du positionnement idéal de l'instant de régénération sur chaque voie X et Y à la réception du signal démodulé.

Pour qu'une bonne décision soit effectuée à la réception, c'est-à-dire une décision telle que le signal régénéré soit identique au signal émis, il est impératif que l'instant de décision effectif sur chaque voie X et Y soit le plus proche possible de l'instant de décision optimal.

Or, d'une part, l'horloge de régénération doit être retrouvée par un traitement du signal reçu, et, d'autre part, l'égaliseur temporel qui est commandé par des informations prélevées sur le signal reçu aux instants de régénération perturbe certains procédés de récupération d'horloge de modulation.

C'est ainsi que le procédé d'asservissement d'horloge décrit dans l'article de K.H. Mueller, M. Müller intitulé "Timing Recovery in Digital Synchronous Data Receivers" paru dans IEEE Trans. on Comm., de Mai 1976 est mis en défaut par la présence d'un égaliseur temporel (en fréquence intermédiaire ou en bande de base) qui écrase la caractéristique de phase.

Le procédé d'asservissement d'horloge décrit dans l'article de H. Sari, et autres, intitulé "Minimum Mean-Square Error Timing Recovery Schemes for Digital Equalizers" paru dans IEEE Trans. on Comm., July 1986 ne peut pas être mis en oeuvre simultanément sur les deux voies X et Y à cause du couplage induit par l'égalisation temporelle en fréquence intermédiaire (l'asservissement sur une voie écrase la caractéristique de phase de l'asservissement de l'autre voie par le truchement du couplage induit par l'égalisation temporelle en fréquence intermédiaire).

Dans une autre réalisation de l'art connu, tel que décrit dans la demande de brevet EP-A-230 900 on réalise sur chaque voie la régénération d'une raie rythme (dispositif non linéaire appliqué au signal : par exemple différentiateur détectant les passages par le niveau moyen du signal, d'où création d'une raie rythme), puis en synchronisant sur cette raie une boucle à verrouillage de phase (on effectue ainsi un filtrage à bande étroite qui assure une horloge récupérée faiblement bruitée). Enfin, un déphaseur, ajusté manuellement lors du réglage (on cherche à obtenir le taux d'erreur minimum en présence de bruit thermique), permet l'échantillonnage du signal reçu avec la phase optimale.

Cette solution présente le grave inconvénient de nécessiter un ajustement manuel des déphaseurs des deux voies X et Y pour obtenir le taux d'erreur minimal en présence de bruit thermique. Or le taux d'erreur dépend simultanément des deux paramètres (les signaux numériques régénérés issus des voies X et Y sont multiplexés), ce qui conduit à rechercher l'optimum par des ajustages répétés.

D'autre part les dérives de phase dues à différents facteurs (vieillissement, température, variation des tensions d'alimentation, etc.) ne sont pas compensées de manière satisfaisante : seules les dérives communes aux deux voies (mode commun) sont compensées par l'égaliseur temporel, alors que les dérives différentielles ne peuvent pas l'être et diminuent les performances du récepteur.

L'invention a pour objet de pallier ces inconvénients.

Elle propose à cet effet un procédé d'asservissement de l'instant de régénération dans une transmission numérique utilisant une modulation de porteuse selon deux axes en quadrature dans lequel on recherche l'instant de régénération optimal de l'une des voies par ajustement manuel, caractérisé en ce qu'on compare les deux mêmes échantillons de la réponse inpulsionnelle phase sur les deux voies et, on réagit sur le décalage de l'instant de régénération de la seconde voie pour que ces deux échantillons de la réponse impulsionnelle soient égaux.

L'invention propose, également, un dispositif de régénération pour la mise en oeuvre de ce procédé tel qu'il comprend :
- un premier circuit de régénération relatif à l'une des voies (voie X) à réglage manuel :
- un second circuit de régénération relatif à l'autre voie (voie Y) à commande électrique :
- un circuit de comparaison des signaux de sortie de ces deux circuits et de commande du second circuit de régénération.

Avantageusement, le premier et le second circuits de régénération comprennent respectivement un premier et un second convertisseurs analogique-numérique disposés chacun entre l'entrée et la sortie de chaque voie, et un premier et un second circuit de récupération d'horloge disposés entre l'entrée de chaque voie et l'entrée horloge (H) du convertisseur analogique-numérique correspondant . Le premier circuit de récupération d'horloge comprend en série un dispositif non linéaire, une première boucle à verrouillage de phase et un premier déphaseur ajustable à réglage manuel. Le second circuit de récupération d'horloge comprend en série un second dispositif non linéaire, une seconde boucle à verrouillage de phase et un second déphaseur ajustable à commande électrique.

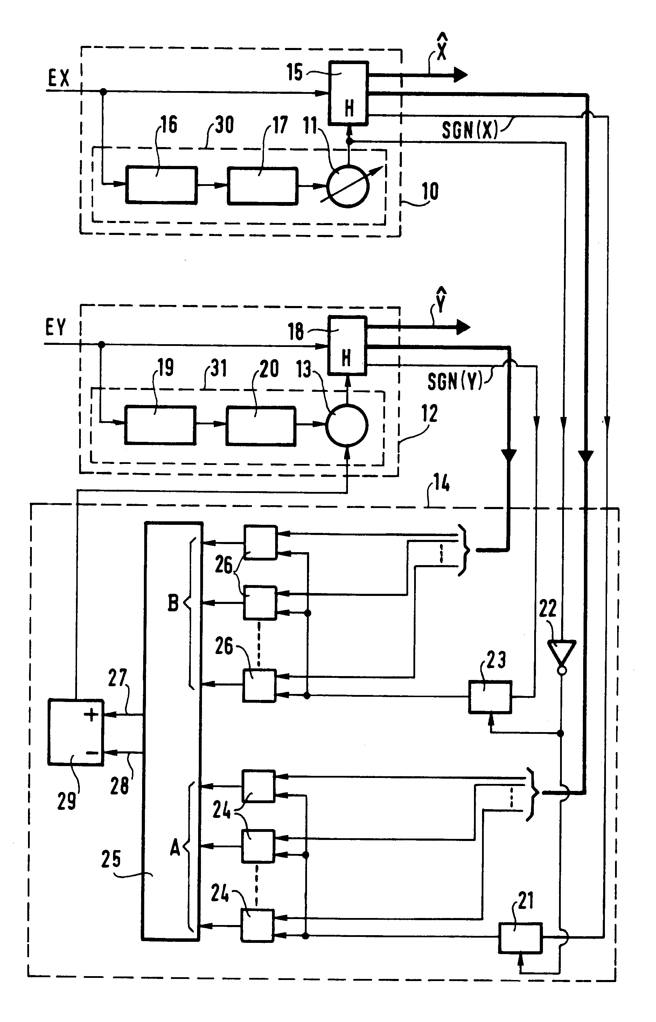

Les caractéristiques et avantages de l'invention ressortiront d'ailleurs de la description qui va suivre, donnée à titre d'exemple non limitatif, en référence à la figure unique qui représente un dispositif de mise en oeuvre du procédé de l'invention.

L'invention a pour objet de minimiser les dissymétries entre les instants de régénération relatifs des voies X et Y. Le procédé de l'invention vise donc à ce que la voie asservie (par exemple Y) présente le même décalage de l'instant de regénération (par rapport à l'optimum de cette voie, ici Y) que celui de la voie de référence (ici X).

Pour estimer cet écart, on compare les deux mêmes échantillons de la réponse impulsionnelle phase sur les deux voies X et Y (par exemple hplx et hply qui sont les échantillons pris aux instants $t = nT$, où T est l'intervalle de temps élémentaire séparant l'émission de deux symboles successifs, de la parie phase de la réponse impulsionnelle respectivement sur la voie X et la voie Y) et on réagit sur le décalage de l'instant de régénération de la voie Y pour que les deux échantillons de la réponse impulsionnelle soient égaux ce qui assure des décalages de l'instant de régénération identiques sur les deux voies.

Le décalage commun est ensuite rattrapé (s'il n'est pas trop important, ce qui est le cas prévu ici) par l'égaliseur temporel.

Ce procédé présente donc deux avantages :
- il facilite le réglage puisqu'il n'y a plus qu'un déphaseur à ajuster, ce qui se fait en une seule opération ;
- il y a rattrapage automatique des dérives différentielles (température, vieillissement).

L'intérêt principal de ce procédé est une amélioration des performances.

La figure représente un dispositif de mise en oeuvre du procédé selon l'invention.

Ce dispositif comprend :
- un premier circuit 10 de régénération relatif à l'une des voies (voie X sur la figure) à réglage manuel ;
- un second circuit 12 de régénération relatif à l'autre voie (voie Y sur la figure ) à commande électrique ;
- un circuit 14 de comparaison des signaux de sortie de ces deux circuits et de commande du second circuit de régénération.

Dans le cas d'une modulation MAQ $2^{2M}$ par exemple (MAQ ou "QAM" = "Quadrature Amplitude Modulation"), le premier circuit 10 de régénération, relatif à la voie X, comprend d'une part un premier convertisseur 15 analogique-numérique (N bits) disposé entre son entrée EX et sa sortie, et d'autre part un premier dispositif non linéaire 16, une première boucle à verrouillage de phase 17 en série avec un premier déphaseur 11 ajustable à réglage manuel qui forment un circuit 30 de récupération d'horloge pour cette voie X disposé entre l'entrée EX et l'entrée horloge H du convertisseur 15.

Le second circuit 12 de régénération comprend les mêmes éléments disposés entre eux de la même façon que dans le premier circuit 10, soit d'une part un second convertisseur analogique-numérique 18 (N bits), et d'autre part un second dispositif non linéaire 19, une seconde boucle à verrouillage de phase 20 ainsi qu'un second déphaseur ajustable 13 à commande électrique disposé en série qui forment un circuit 31 de récupération d'horloge pour cette voie Y.

En sortie des convertisseurs 15 et 18, on obtient respectivement les signaux $\hat{X}$ de décision sur X représentée sur M bits et $\hat{Y}$ de décision sur Y représentée sur M bits.

Le circuit de comparaison 14 reçoit d'une part N-M premiers bits représentant le signal d'erreur de la première voie qui proviennent du premier convertisseur 15, et d'autre part N-M seconds bits représentant le signal d'erreur de la seconde voie qui proviennent du second convertisseur 18.

Les N-M premiers bits (voie X) sont entrés dans N-M premières cellules OU exclusif 24 dont les sorties sont reliées aux N-M premières entrées (A) d'un comparateur 25 de N-M bits, les N-M seconds bits (voie Y) sont entrés dans N-M seconds cellules OU exclusif 26 dont les sorties sont reliées aux N-M secondes entrées (B) du comparateur 25.

La seconde entrée de chacune des N-M premières cellules OU exclusif 24 est reliée à la sortie d'une première cellule retard 21 dont l'entrée reçoit un signal issu du premier convertisseur 15 donnant le signe de X (SGN(X)) et dont l'entrée horloge reçoit le signal sortant du premier déphaseur 11, après passage dans un inverseur 22.

De même, la seconde entrée da chacune des N-M secondes cellules OU exclusif 26 est reliée à la sortie d'une seconde cellule retard 23 dont l'entrée reçoit un signal issu du second convertisseur 18 donnant le signe de Y (SGN(Y)) et dont l'entrée horloge reçoit le signal sortant de l'inverseur 22.

Les deux sorties 27, 28 du comparateur 25, telles que respectivement A < B, ou A > B sont reliées respectivement aux entrées + et - d'un intégrateur analogique 29 dont la sortie est connectée à l'entrée de commande du second déphaseur 13.

Pour évaluer l'écart entre les instants de décision relatifs on compare les quantités :
sgn (Xr [nT]). Ex [(n + 1)T] sur la voie X et sgn (Yr [nT]). Ey [(n + 1)T] sur la voie Y où sgn (Xr [nT]), représenté par le bit de plus fort poids du convertisseur, désigne le signe du signal échantillonné à l'instant nT sur la voie X et Ex [(n + 1)T] , représenté en pratique par les N-M bits de plus faible poids du convertisseur, désigne le signal d'erreur échantillonné à l'instant (n + 1)T sur la voie X. N est le nombre de bits du convertisseur et M le nombre de bits associé à la modulation MAQ (ou "QAM" en anglais soit "Quadrature amplitude modulation") : par exemple M = 3 pour une modulation MAQ 64 et si N = 6 alors le signal d'erreur est représenté sur 3 bits.

L'expression E(sgn(Xr [nT]). Ex [(n + 1)T] -sgn (Yr [nT]). Ey [(n + 1)T] où le symbole E désigne l'espérance mathématique, est proportionnelle à hp1x-hp1y. Le signal associé à cette expression pilote le déphaseur de la voie Y de façon à minimiser cette expression.

Il est bien entendu que la présente invention n'a été décrite et représentée qu'à titre d'exemple préférentiel et que l'on pourra remplacer ses éléments constitutifs par des éléments équivalents sans, pour autant sortir du cadre de l'invention.

Ainsi tous les estimateurs de phase du type E-(sgn(Xr [nT]). Ex [(n + i)T] -sgn (Yr [nt]). Ey [(n + i)T] ), avec i entier relatif non nul, et plus particulièrement pour i = -1 sont utilisables.

## Revendications

1.  Procédé d'asservissement de l'instant de régénération dans une transmission numérique utilisant une modulation de porteuse selon deux axes en quadrature, dans lequel on recherche l'instant de régénération optimal de l'une des voies (voie X) par ajustement manuel, caractérisé en ce qu'on compare les deux mêmes échantillons de la réponse impulsionnelle phase sur les deux voies et, on réagit sur le décalage de l'instant de régénération de la seconde voie (voie Y) pour que les deux échantillons de la réponse impulsionnelle soient égaux.

2.  Procédé selon la revendication 1, caractérisé en ce qu'on rattrape alors le décalage commun.

3.  Dispositif de régénération, pour transmission numérique utilisant une modulation de porteuse selon deux axes en quadrature, comprenant :

    -   un premier circuit (10) de régénération relatif à l'une des voies (voie X) à réglage manuel;
    -   un second circuit (12) de régénération relatif à l'autre voie (voie Y);
        caractérisé en ce que le second circuit (12) est à commande électrique et en ce qu'il comprend en outre un circuit (14) de comparaison des signaux de sortie de ces deux circuits et de commande du second circuit de régénération pour minimiser l'écart entre les instants de régénération relatifs aux deux voies.

4.  Dispositif selon la revendication 3, caractérisé en ce que le premier et le second circuits de régénération (10, 12) comprennent respectivement un premier et un second convertisseurs analogique-numérique (15, 18) disposés chacun entre l'entrée (EX, EY) et la sortie de chaque voie et un premier et un second circuits de récupération d'horloge (30, 31) disposés entre l'entrée de chaque voie (EX, EY) et l'entrée horloge (H) du convertisseur analogue-numérique (15, 18) correspondant.

5.  Dispositif selon la revendication 4, caractérisé en ce que le premier circuit (30) de récupération d'horloge comprend en série : un dispositif non linéaire (16), une première boucle à verrouillage de phase (17) et un premier déphaseur ajustable (11) à réglage manuel.

6.  Dispositif selon la revendication 4, caractérisé en ce que le second circuit (31) de récupération d'horloge comprend en série un second dispositif non linéaire (19), une seconde boucle à verrouillage de phase (20) et un second déphaseur ajustable (13) à commande électrique.

7.  Dispositif selon la revendication 3, caractérisé en ce que le circuit de comparaison (14) comprend un comparateur (25) qui reçoit sur de premières entrées (A) des signaux provenant du premier convertisseur (15) et sur de secondes entrées (B) des signaux provenant du second convertisseur (18).

8.  Dispositif selon l'une quelconque des revendications 3 à 7, caractérisé en ce que la modulation étant de type MAQ $2^{2M}$ , le circuit de comparaison (14) reçoit d'une part N-M premiers bits représentant le signal d'erreur de la première voie qui proviennent du premier convertisseur (15) et d'autre part N-M seconds bits représentant le signal d'erreur de la seconde voie et qui proviennent du second convertisseur (18), les N-M premiers bits (voie X) étant entrés dans N-M premières cellules OU exclusif (24) dont les sorties sont reliées aux N-M premières entrées (A) d'un comparateur (25) de N-M bits, les N-M seconds bits (voie Y) étant entrés dans N-M secondes cellules OU exclusif (26) dont les sorties sont reliées aux N-M secondes entrées (B) du comparateur (25), la seconde entrée de chacune des N-M premières cellules OU exclusif (24) étant reliée à la sortie d'une première cellule retard (21) dont l'entrée reçoit un signal issu du premier convertisseur (15) donnant le signe de X (SGN(X)) et dont l'entrée horloge reçoit le signal sortant du premier déphaseur (11), après passage dans un inverseur (22), de même, la seconde entrée de chacune des N-M secondes cellules OU exclusif (26) étant reliée à la sortie d'une seconde cellule retard (23) dont l'entrée reçoit un signal issu du second convertisseur (18) donnant le signe de Y (SGN(Y)) et dont l'entrée horloge reçoit le signal sortant de l'inverseur (22), les deux sorties (27, 28) de ce comparateur, telles que respectivement A < B ou A > B, étant reliées respectivement aux entrées - et - d'un intégrateur logique (29) dont la sortie est connectée à l'entrée de commande du second déphaseur (13).

## Claims

1. A method of servo-controlling the instant of regeneration in a digital transmission in which a carrier is modulated along two axes in quadrature, in which the optimum instant of regeneration is sought on one of the paths (path X) by manual adjustment, the method being characterized in that two corresponding samples of the phase impulse response on the two paths are compared and the offset of the instant of regeneration on the second path (path Y) is reacted upon so that the two samples of the impulse response become equal.

2. A method according to claim 1, characterized in that the common offset is subsequently compensated.

3. A regeneration device for digital transmission using a carrier modulation along two axes in quadrature, comprising:
   - a manually-adjusted first regenerator circuit (10) for one of the paths (path X);
   - a second regenerator circuit (12) for the other path (path Y);
   - characterized in that the second circuit (12) is electrically controlled, and in that it further includes a comparator circuit (14) for comparing the output signals from the two regenerator circuits and for controlling the second regenerator circuit in order to minimize the difference existing between the instants of regeneration relative to the two paths.

4. A device according to claim 3, characterized in that the first and second regenerator circuits (10, 12) respectively comprise first and second analog-to-digital converters (15, 18) each disposed between the input (EX, EY) and the output of the corresponding path, and first and second clock recovery circuits (30, 31) each disposed between the input (EX, EY) of the corresponding path and a clock input (H) of the corresponding analog-to-digital converter (15, 18).

5. A device according to claim 4, characterized in that the first clock recovery circuit (30) comprises, in series: a non-linear device (16), a first phase locked loop (17), and a manually-adjustable first phase shifter (11).

6. A device according to claim 4, characterized in that the second clock recovery circuit (31) comprises, in series: a second non-linear device (19), a second phase locked loop (20), and an electrically-controlled second phase shifter (13).

7. A device according to claim 3, characterized in that the comparator circuit (14) comprises a comparator (25) which receives signals from the first converter (15) on first inputs (A) and signals from the second converter (18) on second inputs (B).

8. A device according to any one of claims 3 to 7, characterized in that with $2^{2M}$ QAM type modulation, the comparator circuit (14) receives firstly N-M first bits representative of the error signal on the first path coming from the first converter (15), and secondly N-M second bits representative of the error signal on the second path and coming from the second converter (18), with the N-M first bits (path X) being input to N-M first exclusive OR gates (24) whose outputs are connected to the N-M first inputs (A) of an N-M comparator (25), the N-M second bits (path Y) being input to N-M second exclusive OR gates (26) whose outputs are connected to the N-M second inputs (B) of the comparator (25), the second input of each of the N-M first exclusive OR gates (24) being connected to the output of a first delay cell (21) whose input receives a signal delivered by the first converter (15) and providing the sign of X (SGN (X)) and whose clock input receives the signal delivered by the first phase shifter (11) after passing through an inverter (22), and similarly the second input of each of the N-M second exclusive OR gates (26) being connected to the output of a second delay cell (23) whose input receives a signal delivered by the second converter (18) and providing the sign of Y (SGN (Y)) and whose clock input receives the signal from said inverter (22), said comparator having two outputs (27, 28), signalling respectively A<B or A>B, which are respectively connected to the + and - inputs of an analog integrator (29) whose output is connected to the control input of the second phase shifter (13).

**Patentansprüche**

1. Verfahren zur Regelung des Regenerationszeitpunktes bei einer Digitalübertragung, die die Modulation eines Trägers gemäß zwei Achsen in Quadratur verwendet, bei der der optimale Regenerationszeitpunkt eines der Kanäle (Kanal X) durch Handjustierung gesucht wird, dadurch gekennzeichnet, daß die beiden gleichen Proben der Phasenimpulsantwort in den beiden Kanälen miteinander verglichen werden, und auf die Versetzung des Regenerationszeitpunktes des zweiten Kanals (Kanal Y) derart eingewirkt wird, daß die beiden Proben der Impulsantwort gleich werden.

2. Verfahren nach Anspruch 1, dadurch gekennzeichnet, daß die gemeinsame Versetzung egalisiert wird.

3. Regenerationseinrichtung zur Digitalübertragung, die die Modulation eines Trägers gemäß zwei Achsen in Quadratur verwendet und aufweist:
   - eine erste Regenerationsschaltung (10) für einen der Kanäle (Kanal X) mit Handregelung,
   - eine zweite Regenerationsschaltung (12) für den anderen Kanal (Kanal Y);
   - dadurch gekennzeichnet, daß die zweite Schaltung (12) elektrisch gesteuert wird, und daß die Einrichtung weiter eine Schaltung (14) zum Vergleichen der Ausgangssignale der beiden Schaltungen und zum Steuern der zweiten Regenerationsschaltung aufweist, um die Versetzung zwischen den Regenerationszeitpunkten der beiden Kanäle zu minimieren.

4. Einrichtung nach Anspruch 3, dadurch gekennzeichnet, daß die erste bzw. die zweite Regenerationsschaltung (10, 12) einen ersten bzw. einen zweiten Analog-Digital-Wandler (15, 16) aufweist, der zwischen den Eingang (EX, EY) und den Ausgang des betreffenden Kanals geschaltet ist, weiter eine erste bzw. eine zweite Taktwiedergewinnungsschaltung (30, 31) aufweist, die zwischen den Eingang (EX, EY) des betreffenden Kanals und den Takteingang (H) des entsprechenden Analog-Digital-Wandlers (15, 18) geschaltet ist.

5. Einrichtung nach Anspruch 4, dadurch gekennzeichnet, daß die erste Taktwiedergewinnungsschaltung (30) eine Reihenschaltung bestehend aus einer nichtlinearen Einrichtung (16), einer erstes Phasenverriegelungsschleife (17) und einem ersten justierbaren Phasenschieber (11) mit Handeinstellung umfaßt.

6. Einrichtung nach Anspruch 4, dadurch gekennzeichnet, daß die zweite Taktwiedergewinnungsschaltung (31) eine Reihenschaltung bestehend aus einer zweiten nichtlinearen Einrichtung (19), einer zweiten Phasenverriegelungsschleife (20) und einem justierbaren Phasenschieber (13) mit elektrischer Steuerung umfaßt.

7. Einrichtung nach Anspruch 3, dadurch gekennzeichnet, daß die Vergleichsschaltung (14) einen Komparator (25) aufweist, der an ersten Eingängen (A) Signale des ersten Wandlers (15), und an zweiten Eingängen (B) Signale des zweiten Wandlers (18) empfängt.

8. Einrichtung nach einem beliebigen Anspruch 3 bis 7, dadurch gekennzeichnet, daß bei der vorliegenden Phasenmodulation des Typs MAQ $2^{2M}$ die Vergleichsschaltung (14) einerseits N-M erste Bits, die das Fehlersignal des ersten Kanals darstellen und vom ersten Wandler (15) geliefert werden, und andererseits N-M zweite Bits, die das Fehlersignal des zweiten Kanals darstellen und vom zweiten Wandler (18) geliefert werden, empfängt, wobei die N-M ersten Bits (Kanal X) in N-M erste Exklusiv-ODER-Tore (24) eingegeben werden, deren Ausgänge an die N-M ersten Eingänge (A) eines Komparators (25) für N-M Bits angeschlossen sind, und wobei die N-M zweiten Bits (Kanal Y) in N-M zweite Exklusiv-ODER-Tore (26) eingegeben werden, deren Ausgänge an N-M zweite Eingänge (B) des Komparators (25) angeschlossen sind, wobei der zweite Eingang jedes der N-M ersten Exklusiv-ODER-Tore (24) an den Ausgang eines ersten Verzögerungsgliedes (21) angeschlossen sind, dessen Eingang ein vom ersten Wandler (15) ausgegebenes Signal empfängt, das das Vorzeichen von X (SGN (X)) angibt, und dessen Takteingang das vom zweiten Phasenschieber (11) ausgegebene Signal nach Durchgang durch einen Inverter (22) empfängt, und wobei der zweite Eingang jeder der N-M zweiten Exklusiv-ODER-Tore (26) an den Ausgang eines zweiten Verzögerungsgliedes (23) angeschlossen ist, dessen Eingang ein vom zweiten Wandler (18) ausgegebenes Signal empfängt, das das Vorzeichen von Y (SGN (Y)) angibt und dessen Takteingang das Ausgangssignal des Inverters (22) empfängt, wobei die beiden Ausgänge (27, 28) des Komparators, für die A<B bzw. A>B gilt, an den Eingang + bzw. - eines logischen Integrators (29) angeschlossen sind, dessen Ausgang mit dem Steuereingang des zweiten Phasenschiebers (13) verbunden ist.